# EUROPEAN PATENT APPLICATION

(11) **EP 4 803 888 A1**
(43) Date of publication of application: **09.09.2026**
(21) Application number: 24882017.7
(22) Date of filing: 28.08.2024
(51) Int. Cl.: G01N 21/88

(54) **DEFECT INSPECTION SYSTEM AND DEFECT INSPECTION METHOD**

(30) Priority: 23.10.2023 JP 2023181559
(71) Applicant: Hitachi, Ltd., Tokyo 100-8280 (JP)
(72) Inventor: HARIYAMA Tatsuo, Tokyo 100-8280 (JP); WATANABE Masahiro, Tokyo 100-8280 (JP); MARUNO Kenji, Tokyo 100-8280 (JP); TOYOUCHI Tetsuya, Tokyo 100-8280 (JP)
(74) Representative: Mewburn Ellis LLP
(86) International application number: PCT/JP2024/030718
(87) International publication number: WO 2025/088900

(57) **Abstract**

The present invention provides a defect inspection system and a defect inspection method with which it is possible to select a sensor for inspecting a defect in accordance with the defect type. A defect inspection system according to the present invention is provided with a camera (100) that images an inspection target object (101) to obtain a captured image of the inspection target object (101), and a processing device (120) that is provided with a database (500), a defect detecting unit (104), and a sensor selecting unit (107). The database (500) stores sensor data indicating a relationship between the types of defects of the inspection target object (101) and sensors (108, 109) used to inspect the defects. The defect detecting unit (104) performs image processing to detect a defect from the captured image, and to determine the type of defect. The sensor selecting unit (107) selects sensors (108, 109) to be used to inspect the defect, in accordance with the type of defect on the basis of the sensor data stored in a database (500).

## Description

### TECHNICAL FIELD OF THE INVENTION

The present invention relates to a system and a method of inspecting a defect of an inspection target object.

### BACKGROUND ART

Quality and reliability of industrial products and parts of the industrial products are controlled by measuring and inspecting defects such as scratches and rust. An example of a defect inspection system of the related art is described in Patent Literature 1. A surface defect inspection device disclosed in Patent Literature 1 includes an imaging device that images a planar inspection target object, an image processing device that detects a defect on a surface of the inspection target object by performing image processing on the captured image and obtains positional information of the defect, and a precision inspection device that performs precision inspection of the defect on the surface of the inspection target object based on the positional information of the defect, and inspects the defect in detail using the precision inspection device.

### DOCUMENT LIST

### PATENT LITERATURE

Patent Literature 1: JP 2002-168793 A

### SUMMARY OF INVENTION

### TECHNICAL PROBLEM

An inspection target object may have various kinds of defects, and a sensor (device) required for detailed inspection of the defect differs depending on a kind of defect. Therefore, a sensor corresponding to the type of defect is required for detailed inspection of the defect.

However, in a defect inspection system of the related art, a sensor (device) used for detailed inspection of a defect is predetermined for a specific sensor. For example, in the surface defect inspection device disclosed in Patent Literature 1, it is predetermined that the precision inspection device that detects a shape and a depth of a defect is a microscope (for example, a differential interference microscope and a two-beam interference microscope). Accordingly, a defect inspection system capable of selecting sensors in accordance with various types of defects is required.

An object of the present invention is to provide a defect inspection system and a defect inspection method capable of selecting a sensor for inspecting a defect in accordance with a type of defect.

### SOLUTION TO PROBLEM

According to an aspect of the present invention, a defect inspection system includes a camera configured to image an inspection target object to obtain a captured image of the inspection target object, and a processing device including a database, a defect detecting unit, and a sensor selecting unit. The database stores sensor data indicating a relationship between a type of defect of the inspection target object and a sensor used for inspecting the defect. The defect detecting unit performs image processing to detect the defect from the captured image and obtain the type of defect. The sensor selecting unit selects a sensor to be used for inspecting the defect in accordance with the type of defect based on the sensor data stored in the database.

According to another aspect of the present invention, a defect inspection method includes an imaging step of imaging an inspection target object with a camera to obtain a captured image of the inspection target object, a defect detecting step of causing a processing device to perform image processing to detect a defect of the inspection target object from the captured image and obtain a type of defect, and a sensor selecting step of causing the processing device to select a sensor to be used for inspecting the defect in accordance with the type of defect based on sensor data indicating a relationship between the type of defect and a sensor to be used for inspecting the defect.

### ADVANTAGEOUS EFFECTS OF INVENTION

According to the present invention, it is possible to provide a defect inspection system and a defect inspection method capable of selecting a sensor inspecting a defect in accordance with a type of defect.

Problems, configurations, and effects other than those described above will be clarified by the following description of embodiments for carrying out the invention.

### BRIEF DESCRIPTION OF DRAWINGS

[FIG. 1] FIG. 1 is a diagram illustrating an example of a configuration of a defect inspection system according to embodiment 1 of the present invention.
[FIG. 2] FIG. 2 is a diagram illustrating a processing flow of a defect inspection method according to embodiment 1 of the present invention.
[FIG. 3A] FIG. 3A is a diagram illustrating a method of causing a defect detecting unit to detect a defect and obtain a type of defect from an image captured by a camera, and is a diagram illustrating an example of a part of a captured image including a defect that is scratch.
[FIG. 3B] FIG. 3B is a diagram illustrating a method of causing a defect detecting unit to detect a defect and obtain a type of defect from an image captured by a camera, and is a diagram illustrating an example of a part of a captured image including a defect that is rust.
[FIG. 3C] FIG. 3C is a diagram illustrating an example of a repair portion of an inspection target object obtained by simulation.
[FIG. 3D] FIG. 3D is a diagram illustrating an example of a repair portion of the inspection target object obtained based on a history of the inspection target object.
[FIG. 4A] FIG. 4A is a diagram illustrating a method using motion capture as a method of causing a defect calculating unit to obtain defect coordinates.
[FIG. 4B] FIG. 4B is a diagram illustrating a method using two cameras as a method of causing a defect calculating unit to obtain defect coordinates.
[FIG. 4C] FIG. 4C is a diagram illustrating a method using a structure from motion method as a method of causing a defect calculating unit to obtain defect coordinates.
[FIG. 5] FIG. 5 is a diagram illustrating an example of data stored in a database of a sensor.
[FIG. 6A] FIG. 6A is a diagram illustrating an example of a method of causing a sensor position and attitude calculating unit to give an instruction of a measurement position of a sensor to a worker.
[FIG. 6B] FIG. 6B is a diagram illustrating an example of a method of causing a work robot to measure the inspection target object using the selected sensor.
[FIG. 7] FIG. 7 is a diagram illustrating a method of causing a repair possibility determining unit to determine whether a defect is repairable or not.
[FIG. 8] FIG. 8 is a diagram illustrating a method in which a worker repairs a defect.

### DESCRIPTION OF EMBODIMENTS

In a defect inspection system and a defect inspection method according to the present invention, a sensor inspecting a defect can be selected in accordance with a type of defect. Therefore, the detailed inspection can be performed on various defects generated in an inspection target object, and quality and reliability of the inspection target object can be managed more effectively.

Hereinafter, embodiments of the present invention will be described with reference to the drawings. Embodiments are examples for describing the present invention, and are omitted and simplified as appropriate for clarity of description. The present invention can be implemented in various other forms. Unless otherwise mentioned, the number of components may be single or plural.

Positions, sizes, shapes, ranges, and the like of the components illustrated in the drawings may not represent actual positions, sizes, shapes, ranges, and the like in order to facilitate understanding of the invention. Therefore, the present invention is not necessarily limited to the position, size, shape, range, and the like disclosed in the drawings.

When there is a plurality of components having the same or similar functions, the same reference numerals may be attached with different subscripts for description. When it is not necessary to distinguish the plurality of components, the subscript are omitted in some cases for description.

In the embodiments, processing performed by executing a program may be described. Here, a computer executes a program using a processor (for example, a CPU or a GPU), and performs processing defined by the program using a storage resource (for example, a memory), an interface device (for example, a communication port), and the like. Therefore, a subject of the processing performed by executing the program may be a processor. Similarly, the subject of the processing performed by executing the program may be a controller, a device, a system, a computer, or a node including a processor. The subject of the processing performed by executing the program may be an arithmetic unit, and may include a dedicated circuit that performs specific processing. Here, the dedicated circuit is, for example, a field programmable gate array (FPGA), an application specific integrated circuit (ASIC), a complex programmable logic device (CPLD), or the like.

The program may be installed on the computer from a program source. The program source may be, for example, a program distribution server or a computer-readable storage medium. When the program source is a program distribution server, the program distribution server may include a processor and a storage resource that stores a distribution target program, and the processor of the program distribution server may distribute the distribution target program to another computer. In the embodiments, two or more programs may be implemented as one program, or one program may be implemented as two or more programs.

### Embodiment 1

A defect inspection system and a defect inspection method according to embodiment 1 of the present invention will be described with reference to the drawings.

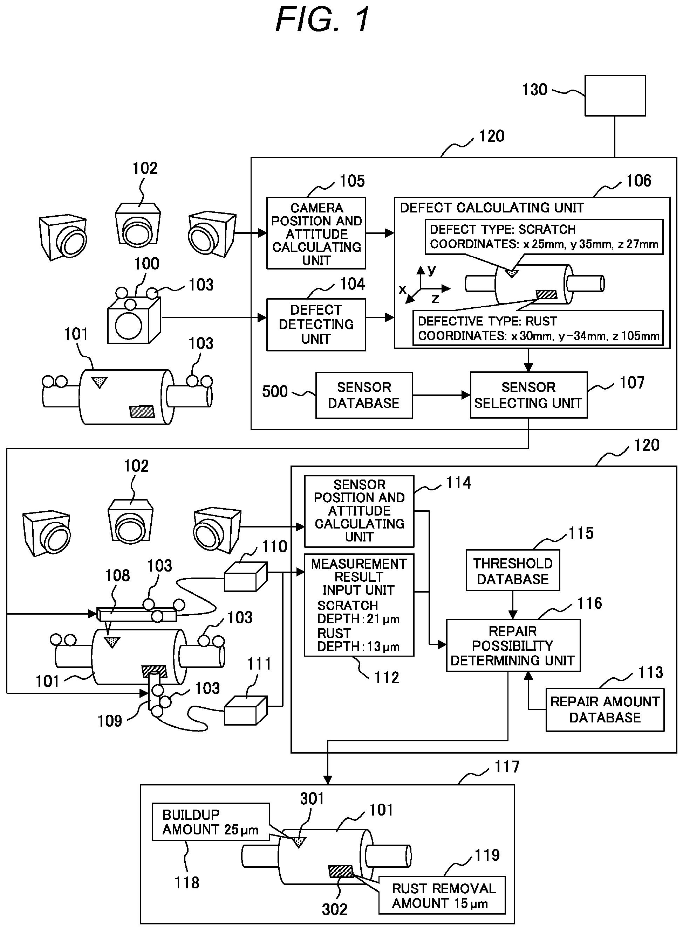

FIG. 1 is a diagram illustrating an example of a configuration of a defect inspection system according to the present embodiment.

The defect inspection system according to the present embodiment includes a camera 100, a motion capture camera 102, a processing device 120, and a display device 130, and inspects a defect of an inspection target object 101. The defect inspection system according to the present embodiment may or may not include a plurality of sensors and a work robot. In FIG. 1, the processing device 120 is divided into two parts for easy understanding of the description.

In the present embodiment, inspection (measurement) of a defect in which a sensor is used and repair of the defect are performed by a worker or a work robot. When the defect inspection system according to the present embodiment does not include the sensor, the worker prepares and uses the sensor, and when the defect inspection system includes the sensor, the work robot uses the sensor. The work robot uses sensors 108 and 109 selected by the defect inspection system from a plurality of sensors included in the defect inspection system. The work robot can mount a sensor selected by the defect inspection system using, for example, a tool changer or the like.

In the present embodiment, for example, a worker or a work robot using the two sensors 108 and 109 will be described, but the worker or the work robot may use one or three or more sensors.

The inspection target object 101 is, for example, an industrial product or a part of the industrial product and has a defect generated in a manufacturing process. Alternatively, the inspection target object 101 is an industrial product or a part of the industrial product collected after use, and has a defect caused in use.

The camera 100 images inspection target object 101 to obtain a captured image of the inspection target object 101. The image captured by the camera 100 is input to the processing device 120.

Reflective markers 103 for motion capture are attached to the camera 100 and the inspection target object 101.

The motion capture camera 102 images the reflective markers 103 attached to the camera 100 and the inspection target object 101. An image captured by the motion capture camera 102 is input to the processing device 120.

The processing device 120 is configured by a computer such as a computer, and includes a defect detecting unit 104, a camera position and attitude calculating unit 105, a defect calculating unit 106, a sensor selecting unit 107, a sensor database 500, a sensor position and attitude calculating unit 114, a measurement result input unit 112, a repair possibility determining unit 116, a threshold database 115, and a repair amount database 113. The sensor database 500, the threshold database 115, and the repair amount database 113 may be included in one database.

The defect detecting unit 104, the camera position and attitude calculating unit 105, the defect calculating unit 106, the sensor selecting unit 107, and the sensor database 500 are components detecting a defect of the inspection target object 101 and selecting the sensors 108 and 109 in accordance with the type of defect (defect type).

The defect detecting unit 104 receives an image (a captured image of the inspection target object 101) captured by camera 100. The defect detecting unit 104 performs image processing on the input image, detects a defect of the inspection target object 101, and obtains a position of the defect in the image (two-dimensional coordinates in the captured image of the inspection target object 101). Further, the defect detecting unit 104 identifies the type of detected defect from the captured image of the inspection target object 101. The type of defect (defect type) is, for example, scratch or rust. Examples of other defect types will be described below. A method of causing the defect detecting unit 104 to detect a defect and obtain a defect type will be described below.

The camera position and attitude calculating unit 105 inputs an image captured by the motion capture camera 102 (an image of the reflective markers 103 attached to the camera 100 and the inspection target object 101). The camera position and attitude calculating unit 105 calculates a position and attitude of the camera 100 with respect to the inspection target object 101 from the input image.

The defect calculating unit 106 inputs processing results of the defect detecting unit 104 and the camera position and attitude calculating unit 105, and obtains what kind of defect occurs at which position of the inspection target object 101 from the position of the defect in the image, the type of defect (defect type), and the position and attitude of the camera 100 with respect to the inspection target object 101. Hereinafter, the position (three-dimensional coordinates) of the defect in the inspection target object 101 is referred to as defect coordinates. The defect calculating unit 106 obtains the defect coordinates from the image captured by the camera 100 (the image of the defect of the inspection target object 101) and the position and attitude of the camera 100 with respect to the inspection target object 101. Then, the defect calculating unit 106 obtains the defect type at the defect coordinates.

The defect calculating unit 106 can generate a defect map of the inspection target object 101 by associating the defect coordinates with the defect type. For example, as illustrated in FIG. 1, the defect map identifies the position of the defect with three-dimensional coordinates (defect coordinates) in the inspection target object 101, and indicates the defect type (for example, scratches and rust) at this position.

The sensor selecting unit 107 selects the sensors 108 and 109 to be used for detailed inspection of the defect in accordance with the type of defect detected by the defect detecting unit 104 with reference to the data stored in the sensor database 500.

The sensor selecting unit 107 notifies the worker of the selected sensors 108 and 109 by displaying the selected sensors 108 and 109 on the display device 130. The sensor selecting unit 107 notifies the work robot of the selected sensors 108 and 109 by transmitting a signal indicating the selected sensors 108 and 109.

The sensor database 500 stores in advance data indicating a relationship between the defect type and the sensors 108 and 109 used for detailed inspection of the defect. The relationship between the defect type and the sensors 108 and 109 used for detailed inspection of the defect is predetermined.

The sensor position and attitude calculating unit 114, the repair possibility determining unit 116, the threshold database 115, and the repair amount database 113 are components performing detailed inspection of the defect and repair of the defect using the sensors 108 and 109 selected in accordance with the defect type.

In the present embodiment, for example, an example in which the inspection target object 101 has two defects will be described. For one defect, it is assumed that the defect type is scratch and a roughness meter (surface roughness measurement instrument) is selected as the sensor 108 for this defect type. Another defect is rust as a defect type, and a film thickness meter is selected as the sensor 109 for this defect type.

The positions (coordinates) of the defects to be inspected or repaired using the sensors 108 and 109 are indicated by the defect coordinates obtained by the defect calculating unit 106.

The reflective markers 103 for motion capture are attached to the sensors 108 and 109 selected by the sensor selecting unit 107.

The motion capture camera 102 images the reflective marker 103 attached to the sensors 108 and 109 and the inspection target object 101. An image captured by the motion capture camera 102 is input to the processing device 120.

The sensor position and attitude calculating unit 114 calculates the positions and attitudes of the sensors 108 and 109 with respect to the inspection target object 101 when a detailed inspection of the defect is performed using the sensors 108 and 109 selected by the sensor selecting unit 107. The sensor position and attitude calculating unit 114 inputs images (images of the sensors 108 and 109 and the reflective markers 103 attached to the inspection target object 101) captured by the motion capture camera 102. The sensor position and attitude calculating unit 114 calculates the positions and attitudes of the sensors 108 and 109 with respect to the inspection target object 101 from the input images.

The sensor position and attitude calculating unit 114 obtains a difference between the calculated positions of the sensors 108 and 109 and the defect position (defect coordinates) obtained by the defect calculating unit 106, and gives instruction for the measurement positions of the sensors 108 and 109 to a worker or a work robot.

The worker or the work robot adjusts the positions of the sensors 108 and 109 to reduce the difference, and causes the sensors 108 and 109 to inspect (measure) the defect at the position indicated by the defect coordinates. Then, the worker or the work robot inspects (measures) the defect using the sensors 108 and 109.

The measurement result input unit 112 inputs the size of the defect measured by the sensors 108 and 109 as a measurement result. For example, when the sensor 108 is a roughness meter, the sensor 108 measures a location of scratch which is a defect, and outputs a measurement result (an area and a depth of the scratch) to the processing device 120 via the controller 110 of the sensor 108. For example, when the sensor 109 is a film thickness meter, the sensor 109 measures a location of rust which is a defect, and outputs a measurement result (rust area and thickness) to the processing device 120 via the controller 111 of the sensor 109. The measurement result input unit 112 inputs the area and depth of the scratch and the area and thickness of the rust as the size of the defect.

The repair possibility determining unit 116 associates the measurement results (sizes of defects) of the sensors 108 and 109, the positions of the sensors 108 and 109 when the sensors 108 and 109 obtain the measurement results, and positions of the defects (defect coordinates) with each other. The measurement results of the sensors 108 and 109 are obtained from the measurement result input unit 112. The positions of the sensors 108 and 109 are the positions of the sensors 108 and 109 with respect to the inspection target object 101, and are obtained from the sensor position and attitude calculating unit 114. The defect coordinates are obtained from the defect calculating unit 106.

Then, the repair possibility determining unit 116 determines whether the defect can be repaired using the size of the defect measured by the sensors 108 and 109 and the threshold stored in the threshold database 115.

The threshold database 115 stores in advance a threshold for determining whether a defect can be repaired for each type of defect. Any threshold can be determined in advance as this threshold, for example, from information regarding defects that have occurred in the past. For example, this threshold is a threshold for the size of the defect. For example, when the defect is scratch, the depth of the scratch that can be repaired is obtained from information regarding past scratch, and the threshold can be determined based on the obtained depth of the scratch. This threshold may include a threshold for the cost of repairing the defect (repair cost). Any repair cost can be determined in advance as this repair cost based on, for example, the type of defect and the size of the defect. Any threshold can be arbitrarily determined in advance as this threshold for the repair cost based on, for example, a repair cost required when a defect was repaired in the past.

The threshold database 115 may use a threshold obtained by simulation as the threshold for the size of the defect. For example, performance of the inspection target object 101 when the inspection target object 101 has a defect is calculated by simulation, and it is determined to what extent the size of the defect can maintain required performance of the inspection target object 101. Then, a maximum size of the defect at which the inspection target object 101 can maintain the required performance is set as a threshold for the size of the defect.

When the size of the defect measured by the sensors 108 and 109 is less than the threshold for the size of the defect stored in the threshold database 115, the repair possibility determining unit 116 determines that the defect can be repaired. The repair possibility determining unit 116 obtains cost for repairing the defect based on the type of defect and the size of the defect according to a predetermined procedure, and determines that the defect can be repaired when the cost is less than the threshold for the repair cost stored in the threshold database 115. Then, when the size of the defect and the cost for repairing the defect are equal to or more than the thresholds, the repair possibility determining unit 116 determines that the defect cannot be repaired.

When it is determined that the defect can be repaired, the repair possibility determining unit 116 gives an instruction for the position of the defect (that is, a repair portion of the inspection target object 101) and a repair amount for repairing the defect to the worker or the work robot. The repair possibility determining unit 116 obtains the repair amount of the defect according to the size of the defect with reference to the repair amount stored in the repair amount database 113.

The repair amount database 113 storesin advance, for each type of defect, data indicating a relationship between a size of the defect (for example, a depth of scratch and a thickness of rust) and a repair amount for repairing the defect. Any relation is determined in advance as the relationship between the size of the defect and the repair amount. For example, when the type of defect is scratch, a relationship between the depth of the scratch (the size of the scratch) and a buildup amount (repair amount) is defined. When the type of defect is rust, a relationship between the thickness of the rust (the size of the defect) and a rust removal amount (repair amount) is defined.

FIG. 1 schematically illustrates an example of an instruction 117 given by the repair possibility determining unit 116 to a worker or a work robot. The instruction 117 illustrated in FIG. 1 includes positions of defects 301 and 302 which are the repair portions of the inspection target object 101, a repair amount 118 (buildup amount: 25 µm) of the defect 301 that is scratch, and the repair amount 119 (rust removal amount: 15 µm) of the defect 302 that is rust.

The repair possibility determining unit 116 notifies the worker of the instruction 117 by displaying the positions of the defects 301 and 302 and the repair amounts 118 and 119 on the display device 130. The repair possibility determining unit 116 notifies the work robot of the instruction 117 by transmitting signals indicating the positions of the defects 301 and 302 and the repair amounts 118 and 119.

When the defect can be repaired, the worker or the work robot repairs the defect in accordance with the position of the defect (the repair portion of the inspection target object 101) and the repair amount instructed by the repair possibility determining unit 116 of the processing device 120. For repairing the defect, a tool selected based on the position, type, and size of the defect can be used. When the defect cannot be repaired, the worker or the work robot discards the inspection target object 101.

The display device 130 can be, for example, one or both of a display and an augmented reality (AR) glass worn by the worker, and is connected to the processing device 120 in a wired or wireless manner. The processing device 120 can instruct the worker to inspect (measure) the defect and repair the defect by displaying the selected sensors 108 and 109, the obtained position, type, and size of the defect, the determined repair possibility of the defect, the obtained repair amount, and the like on the display device 130. The display device 130 can display a difference between the positions of the sensors 108 and 109 and the position of the defect obtained by the sensor position and attitude calculating unit 114, and can give an instruction for the measurement positions of the sensors 108 and 109 to the worker. For example, the display device 130 can display the instruction 117 illustrated in FIG. 1.

Based on the information displayed on the display device 130, the worker can inspect (measure) the defect using the selected sensors 108 and 109 and repair the defect.

When the defect inspection system according to the present embodiment includes the sensors 108 and 109 and the work robot, the work robot can inspect (measure) the defect and repair the defect using the selected sensors 108 and 109 in accordance with an instruction from the processing device 120. The processing device 120 can notify the work robot of the selected sensors 108 and 109, the position, type, and size of the obtained defect, repair possibility of the determined defect, the obtained repair amount, and the like.

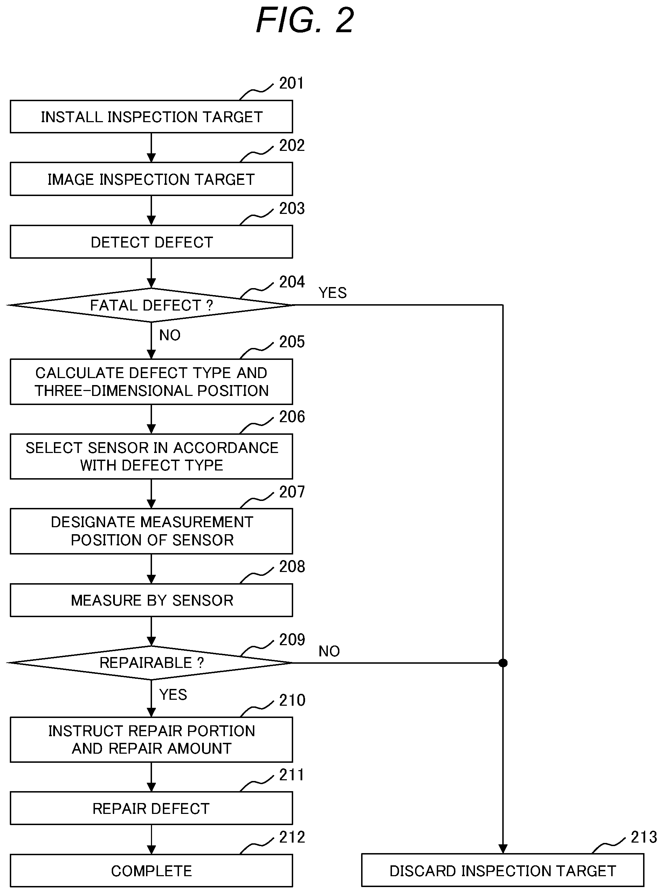

FIG. 2 is a diagram illustrating a processing flow of the defect inspection method according to embodiment 1 of the present invention. The processing flow of the defect inspection method according to the present embodiment will be described with reference to FIG. 2.

In step 201, the worker or the work robot installs the inspection target object 101 at a desired position.

In step 202, the camera 100 images the inspection target object 101 through an operation of the worker or the work robot.

In step 203, the defect detecting unit 104 of the processing device 120 performs image processing on the image (the captured image of the inspection target object 101) captured by the camera 100, and detects a defect of the inspection target object 101 from the captured image. Then, the defect detecting unit 104 obtains an approximate size (for example, an area and depth of the defect) of the detected defect through image processing.

In step 204, the defect detecting unit 104 determines whether the defect detected in step 203 is a fatal defect. The fatal defect is a defect having a size that cannot be repaired (for example, scratch having a depth of 1 mm or more). Detailed inspection using the sensor and performed in a subsequent step is not performed on the inspection target object 101 having the fatal defect. The defect detecting unit 104 determines that the defect is a fatal defect when the size of the defect detected in step 203 is greater than a predetermined threshold. The defect detecting unit 104 determines that the defect is not a fatal defect when the size of the defect is equal to or less than the predetermined threshold.

The process of step 205 is performed on a defect that is not the fatal defect. The process of step 213 is performed on a defect which is the fatal defect.

In step 205, for the defect detected in step 203, the defect detecting unit 104 obtains a position of the defect in the image (two-dimensional coordinates in the captured image of the inspection target object 101) from the captured image of the inspection target object 101, and identifies a type of defect. Subsequently, the defect calculating unit 106 obtains defect coordinates, that is, a position (three-dimensional coordinates) of the defect in the inspection target object 101, and associates the defect coordinates with the defect type.

In step 206, the sensor selecting unit 107 selects the sensors 108 and 109 to be used for detailed inspection of the defect in accordance with the defect type identified by the defect detecting unit 104.

In step 207, the sensor position and attitude calculating unit 114 calculates the positions and attitudes of the sensors 108 and 109 with respect to the inspection target object 101, and gives instruction for the measurement positions of the sensors 108 and 109 to the worker or the work robot based on the obtained positions of the sensors 108 and 109 and the defect coordinates obtained by the defect calculating unit 106.

In step 208, the worker or the work robot measures the defect (the defect detected in step 203) of the inspection target object 101 at the instructed measurement position using the sensors 108 and 109. In step 208, detailed inspection (measurement) of the defect is performed. That is, in the measurement of step 208, the size of the defect less than the size of the defect obtained in step 203 (for example, scratch having a depth of less than 1 mm) is measured by the sensors 108 and 109.

In step 209, the repair possibility determining unit 116 determines whether the defect detected in step 203 can be repaired based on the measurement results of the sensors 108 and 109.

The processing of step 210 is performed on a repairable defect. The processing of step 213 is performed on an unrepairable defect.

In step 210, the repair possibility determining unit 116 instructs the worker or the work robot on the position of the defect (the repair portion of the inspection target object 101) and the repair amount for repairing the defect.

In step 211, the worker or the work robot repairs the defect in accordance with the instruction of the repair possibility determining unit 116.

In step 212, when the worker or the work robot ends the repairing of the defect, the processing of the defect inspection method according to the present embodiment is completed.

In step 213, the worker or the work robot discards the inspection target object 101.

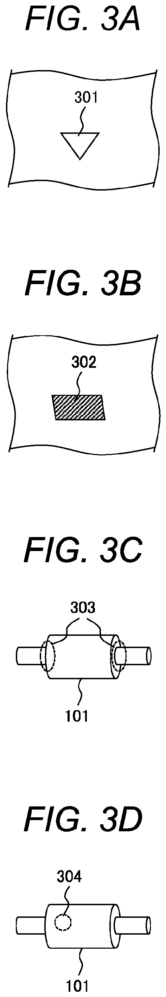

FIGS. 3A and 3B are diagrams illustrating methods of causing the defect detecting unit 104 to detect a defect and obtain a type of defect from an image (captured image of the inspection target object 101) captured by the camera 100.

The defect detecting unit 104 detects a defect from the image captured by the camera 100 through image processing, and identifies the defect type based on a feature corresponding to the defect type recorded in the captured image.

FIG. 3A is a diagram illustrating an example of a part of a captured image including the defect 301 that is scratch. When the defect 301 is the scratch, a change in luminance occurs at the edge of the defect 301 due to illumination light in the image captured by the camera 100. The defect detecting unit 104 can detect the defect 301 that is the scratch, for example, by detecting the edge through image processing. When there is the change in luminance at the edge of the defect in the captured image, the defect detecting unit 104 determines that the type of defect is the scratch.

FIG. 3B is a diagram illustrating an example of a part of the captured image including the defect 302 that is rust. When the defect 302 is the rust, there is a color difference between the background (a portion where rust is not generated) of the inspection target object 101 and the rust in the image captured by the camera 100. The defect detecting unit 104 can detect the defect 302 that is the rust, for example, by detecting such a color difference through image processing. When the color difference is observed between the background (the portion in which the defect is not generated) of the inspection target object 101 and the defect in the captured image, the defect detecting unit 104 determines that the type of defect is the rust.

The inspection target object 101 may have a defect therein. This internal defect is one defect type. A feature of the internal defect is likely not to appear in the image captured by the camera 100. In such a case, a place where an internal defect is likely to occur is obtained in advance by simulation, and this place can be used as a repair portion of the inspection target object 101. In this simulation, a place to which a force is applied or a place to which heat is applied is obtained, and the obtained place is set as a portion where stress acts and an internal defect is likely to occur.

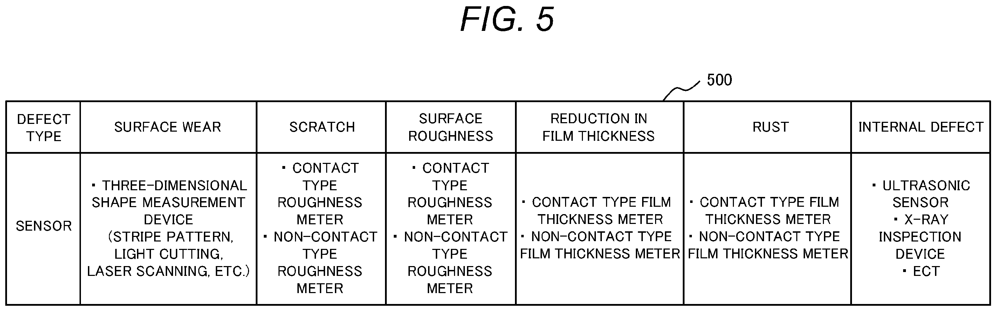

When the defect type is an internal defect, the defect is inspected using, for example, an ultrasonic sensor (see FIG. 5).

FIG. 3C is a diagram illustrating an example of a repair portion 303 of the inspection target object 101 obtained by simulation.

A place where a defect is likely to occur in the inspection target object 101 and a defect type can be identified based on a history of the inspection target object 101, and this place can be set as a repair portion of the inspection target object 101. For example, a place where a defect is likely to occur in the inspection target object 101 and a defect type can be identified based on a past use record of the inspection target object 101 and a past repair history of the defect, and this place can be set as a repair portion of the inspection target object 101.

FIG. 3D is a diagram illustrating an example of the repair portion 304 of the inspection target object 101 obtained based on the history of the inspection target object 101.

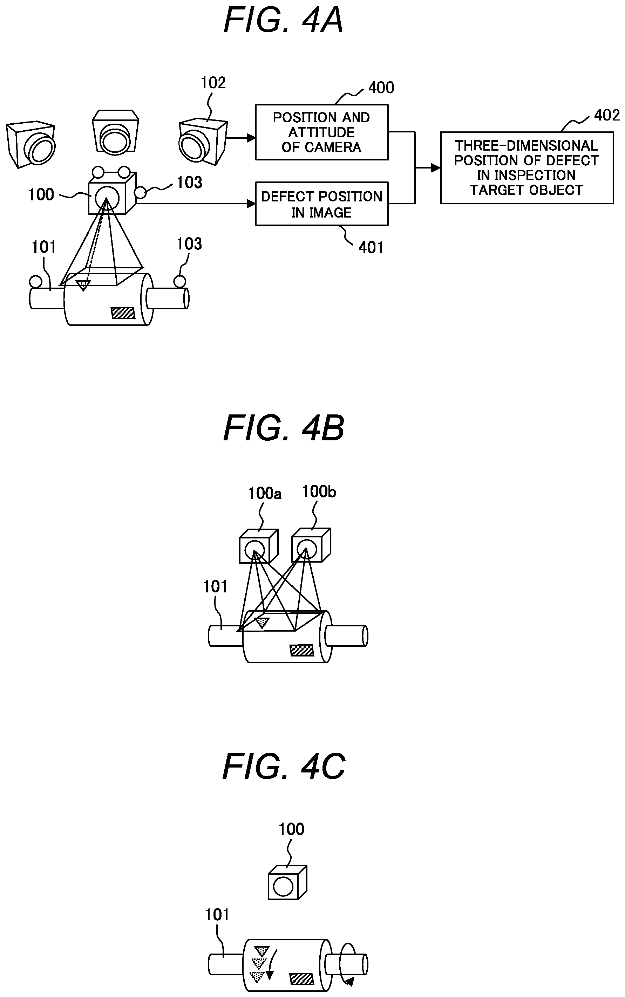

An example of a method of causing the defect calculating unit 106 to obtain the defect coordinate (the position of the defect in the inspection target object 101) will be described with reference to FIGS. 4A, 4B, and 4C.

FIG. 4A is a diagram illustrating a method using motion capture as a method of causing the defect calculating unit 106 to obtain defect coordinates.

Reflective markers 103 for motion capture are attached to the camera 100 and the inspection target object 101. The motion capture camera 102 images the camera 100 and the inspection target object 101. The camera position and attitude calculating unit 105 calculates a position and attitude 400 of the camera 100 with respect to the inspection target object 101 from the image captured by the motion capture camera 102.

The defect calculating unit 106 calculates a three-dimensional position 402 of the defect in the inspection target object 101 as the defect coordinates from the position 401 of the defect in the image captured by the camera 100 obtained by the defect detecting unit 104, and the position and attitude 400 of the camera 100 with respect to the inspection target object 101 obtained by the camera position and attitude calculating unit 105.

FIG. 4B is a diagram illustrating a method using two cameras 100a and 100b as a method of causing the defect calculating unit 106 to obtain the defect coordinates.

The two cameras 100a and 100b may be the same as or different from each other, and are installed at different positions from each other. The two cameras 100a and 100b image the same portion of the inspection target object 101.

The defect calculating unit 106 obtains the three-dimensional position of the defect in the inspection target object 101 using, for example, a stereo imaging method from the difference in the viewing angle between the images captured by the two cameras 100a and 100b, and calculates the defect coordinates.

FIG. 4C is a diagram illustrating a method using a structure from motion method as a method by which the defect calculating unit 106 obtains defect coordinates.

The camera 100 images the inspection target object 101 a plurality of times while shifting a relative position of the inspection target object 101 with respect to the camera 100.

The defect calculating unit 106 obtains the three-dimensional position of the defect in the inspection target object 101 from the plurality of images captured by the camera 100 by the structure from motion (SfM) method, and calculates the defect coordinates. FIG. 4C illustrates an example in which the shape of the inspection target object 101 is rotationally symmetric. For the inspection target object 101 having such a shape, the relative position of the inspection target object 101 with respect to the camera 100 may be shifted by rotating the inspection target object 101 about a rotation target axis.

FIG. 5 is a diagram illustrating an example of data stored in the sensor database 500. A relationship between the defect type and the sensor used for detailed inspection of a defect is determined in advance and stored in advance in the sensor database 500.

The sensor selecting unit 107 selects a sensor to be used for detailed inspection of the defect according to the type of defect detected by the defect detecting unit 104 with reference to the data stored in the sensor database 500. In the sensor database 500, a plurality of sensors may be defined for one defect type. When a plurality of sensors is defined for one defect type in the sensor database 500, the sensor selecting unit 107 may select an optimal sensor from the plurality of sensors in consideration of conditions such as measurement accuracy, a measurement range, a measurement speed, and a device cost according to a required inspection specification. These conditions are determined in advance and stored in advance in the sensor database 500. The worker or the work robot inputs a necessary condition among these conditions to the sensor selecting unit 107.

For example, for a defect in which the defect type is surface wear, a three-dimensional shape measurement device is defined as a sensor used for the detailed inspection of the defect. The three-dimensional shape measurement device measures how much the surface of the inspection target object 101 is worn by measuring the surface shape of the inspection target object 101. As the three-dimensional shape measurement device, for example, a sensor that projects a stripe pattern to measure a three-dimensional shape, a light cutting type sensor that measures a three-dimensional shape, a laser telemeter that scans two dimensions, or the like can be used.

For example, for a defect in which the defect type is scratch and a defect in which the defect type is surface roughness, a contact type roughness meter and a non-contact type roughness meter are defined as sensors used for detailed inspection of the defect. The contact type roughness meter has advantages of high measurement accuracy and low device cost, but has disadvantages of a narrow measurement range and a slow measurement speed. The non-contact type roughness meter is, for example, an optical type, and has the advantage that a measurement range is wider and a measurement speed is faster than that of the contact, but has the disadvantage that a device cost is high.

For example, for a defect in which the defect type is a decrease in a film thickness of a surface coating of the inspection target object 101 and a defect in which the defect type is rust, a contact type film thickness meter and a non-contact type film thickness meter are defined as sensors used for the detailed inspection of the defect.

For example, for a defect in which the defect type is an internal defect, an ultrasonic sensor, an X-ray inspection device, and a sensor for eddy current testing (ECT) are defined as sensors to be used for detailed inspection of the defect.

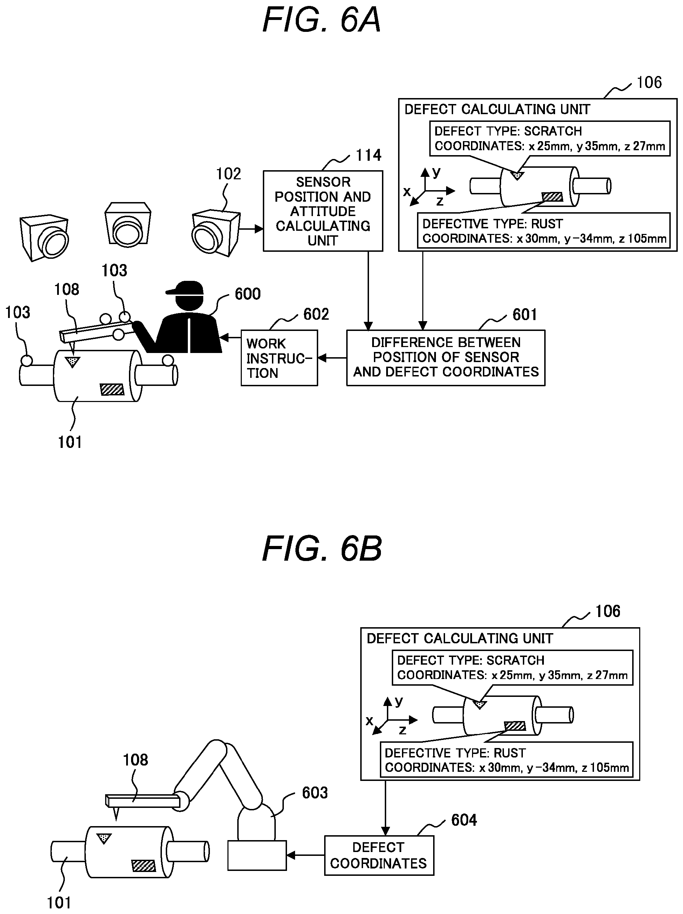

FIG. 6A is a diagram illustrating an example of a method of causing the sensor position and attitude calculating unit 114 to give an instruction for a measurement position of the sensor to the worker 600. An example of a method of the sensor position and attitude calculating unit 114 to calculate the position and attitude of the sensor with respect to the inspection target object 101 and give an instruction for the measurement position of the sensor to the worker 600 will be described with reference to FIG. 6A. Hereinafter, for example, an example in which the defect type is scratch and the sensor 108 is selected will be described.

The worker 600 attaches the reflective marker 103 for motion capture to the selected sensor 108.

The motion capture camera 102 images the reflective marker 103 attached to the sensor 108 and the reflective marker 103 attached to the inspection target object 101.

The sensor position and attitude calculating unit 114 calculates a position and attitude of the sensor 108 with respect to the inspection target object 101, and obtains a difference 601 between the calculated position of the sensor 108 and the defect position (defect coordinates) obtained by the defect calculating unit 106. When the difference 601 is greater than a predetermined threshold, the sensor position and attitude calculating unit 114 displays, on the display device 130, a work instruction 602 for adjusting the position of the sensor 108 so that the difference 601 becomes small. In this way, the sensor position and attitude calculating unit 114 gives an instruction for the measurement position of the sensor 108 to the worker 600.

When the difference 601 is equal to or less than the predetermined threshold, the sensor position and attitude calculating unit 114 displays an instruction to the worker 600 to measure the inspection target object 101 using the sensor 108 on the display device 130.

When the work robot measures the inspection target object 101 using the selected sensor 108, the following processing may be performed.

FIG. 6B is a diagram illustrating an example of a method of causing a work robot 603 to measure the inspection target object 101 using the selected sensor 108. The work robot 603 may measure the inspection target object 101 using the selected sensor 108 in accordance with the following procedure.

The defect calculating unit 106 outputs obtained defect coordinates 604 as a measurement position to the work robot 603. The work robot 603 moves the sensor 108 to the position of the input defect coordinates 604 and measures the inspection target object 101.

By performing the example of the processing described with reference to FIGS. 6A and 6B, detailed inspection of the defect can be performed using the selected sensor.

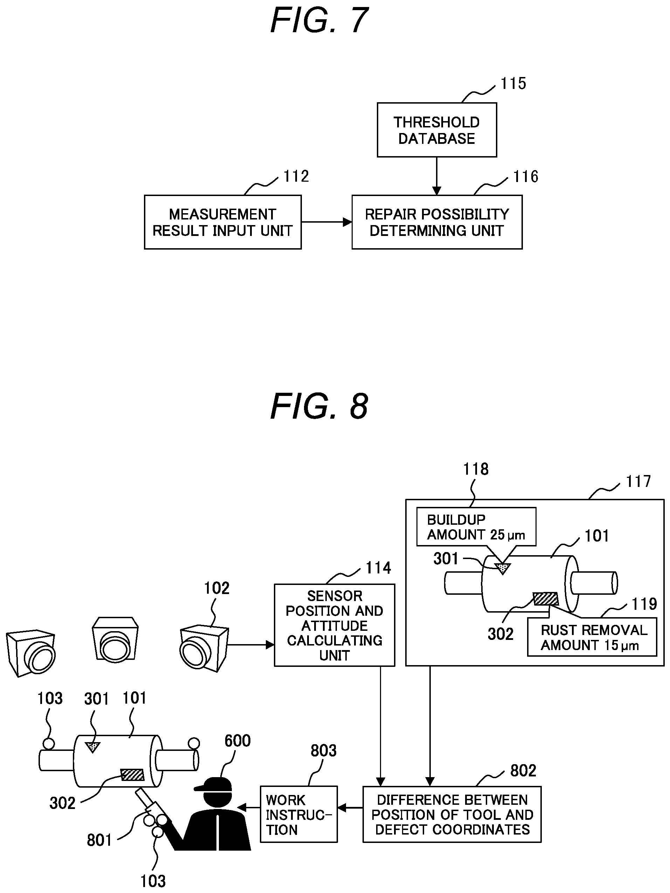

FIG. 7 is a diagram illustrating a method of causing the repair possibility determining unit 116 to determine whether a defect is repairable or not.

When the size of the defect input from the measurement result input unit 112 is less than the threshold for the size of the defect stored in the threshold database 115, the repair possibility determining unit 116 determines that the defect is repairable.

The repair possibility determining unit 116 can also determine whether the defect is repairable in consideration of the cost for repairing the defect. For example, when the defect has a repairable size and the cost for repairing is high due to a position of the inspection target object 101, the repair possibility determining unit 116 determines that the defect is unrepairable. As described above, the threshold database 115 may include a threshold for the cost of repairing the defect (repair cost). When the repair cost of the defect is equal to or greater than the threshold, the repair possibility determining unit 116 can determine that the defect is unrepairable.

FIG. 8 is a diagram illustrating a method of causing the worker 600 to repair a defect.

As described with reference to FIG. 1, the repair possibility determining unit 116 displays the instruction 117 on the display device 130 and gives an instruction for repair work to the worker 600. For example, the instruction 117 includes the positions of the defects 301 and 302 that are repair portions of the inspection target object 101, the repair amount 118 (25 µm of buildup amount) of the defect 301 that is scratch, and the repair amount 119 (15 µm of rust removal amount) of the defect 302 which is rust.

It is assumed that the worker 600 repairs the defect 302 that is rust using the tool 801. The worker 600 attaches the reflective marker 103 for motion capture to the tool 801.

The motion capture camera 102 images the reflective marker 103 attached to the tool 801 and the reflective marker 103 attached to the inspection target object 101.

The sensor position and attitude calculating unit 114 calculates the position of the tool 801 in the same manner as calculating the position and attitude of the sensor 108, and obtains a difference 802 between the calculated position of the tool 801 and the position (defect coordinates) of the defect obtained by the defect calculating unit 106. When the difference 802 is greater than a predetermined threshold, the sensor position and attitude calculating unit 114 displays, on the display device 130, a work instruction 803 for adjusting the position of the tool 801 so that the difference 802 becomes small. In this way, the sensor position and attitude calculating unit 114 gives an instruction for the work position of the tool 801 (the repair portion of the inspection target object 101) to the worker 600.

When the difference 802 is equal to or less than the predetermined threshold, the sensor position and attitude calculating unit 114 displays an instruction to the worker 600 to repair the defect on the display device 130.

In the defect inspection system and the defect inspection method according to the present embodiment, as described above, the sensor inspecting a defect can be selected according to a type of defect, and various defects generated in the inspection target object 101 can be inspected and repaired in detail.

### LIST OF REFERENCE CHARACTERS

- 100, 100a, 100b: camera
- 101: inspection target object
- 102: motion capture camera
- 103: reflection marker
- 104: defect detecting unit
- 105: camera position and attitude calculating unit
- 106: defect calculating unit
- 107: sensor selecting unit
- 108, 109: sensor
- 110, 111: controller
- 112: measurement result input unit
- 113: repair amount database
- 114: sensor position and attitude calculating unit
- 115: threshold database
- 116: repair possibility determining unit
- 117: instruction
- 118, 119: repair amount
- 120: processing device
- 130: display device
- 301, 302: defect
- 303, 304: repair portion
- 400: position and attitude of camera with respect to inspection target object
- 401: position of defect in image captured by camera
- 402: three-dimensional position of defect in inspection target object
- 500: sensor database
- 600: worker
- 601: difference between position of sensor and defect coordinates
- 602: work instruction
- 603: work robot
- 604: defect coordinates
- 801: tool
- 802: difference between position of tool and defect coordinates
- 803: work instruction

## Claims

1. A defect inspection system comprising:
a camera configured to image an inspection target object to obtain a captured image of the inspection target object; and
a processing device including a database, a defect detecting unit, and a sensor selecting unit,
wherein the database stores sensor data indicating a relationship between a type of defect of the inspection target object and a sensor used for inspecting the defect,
wherein the defect detecting unit performs image processing to detect the defect from the captured image and obtain the type of defect, and
wherein the sensor selecting unit selects a sensor to be used for inspecting the defect in accordance with the type of defect based on the sensor data stored in the database.

2. The defect inspection system according to claim 1,
wherein the processing device includes a defect calculating unit, and
wherein the defect calculating unit obtains a position of the defect in the inspection target object from the captured image.

3. The defect inspection system according to claim 2,
wherein the processing device includes a repair possibility determining unit,
wherein the database stores a threshold for a size of the defect and repair amount data indicating a relationship between the size of the defect and a repair amount for repairing the defect,
wherein when the size of the defect is less than the threshold stored in the database, the repair possibility determining unit determines that the defect is repairable, and
wherein when the defect is repairable, the repair possibility determining unit obtains the repair amount with reference to the repair amount data stored in the database.

4. The defect inspection system according to claim 1, further comprising:
a display device,
wherein the sensor selecting unit displays a selected sensor on the display device.

5. The defect inspection system according to claim 1, further comprising:
a work robot,
wherein the sensor selecting unit transmits a signal indicating a selected sensor to the work robot.

6. The defect inspection system according to claim 3, further comprising:
a display device,
wherein the repair possibility determining unit displays the position of the defect and the repair amount on the display device.

7. The defect inspection system according to claim 3, further comprising:
a work robot,
wherein the repair possibility determining unit transmits a signal indicating the position of the defect and the repair amount to the work robot.

8. A defect inspection method comprising:
an imaging step of imaging an inspection target object with a camera to obtain a captured image of the inspection target object;
a defect detecting step of causing a processing device to perform image processing to detect a defect of the inspection target object from the captured image and obtain a type of defect; and
a sensor selecting step of causing the processing device to select a sensor to be used for inspecting the defect in accordance with the type of defect based on sensor data indicating a relationship between the type of defect and a sensor to be used for inspecting the defect.

## Amended claims

### Amended claims under Art. 19.1 PCT

1. A defect inspection system comprising:
a camera configured to image an inspection target object to obtain a captured image of the inspection target object; and
a processing device including a database, a defect detecting unit, and a sensor selecting unit,
wherein a relationship between a type of defect of the inspection target object and a sensor used for inspecting the defect is determined in advance,
wherein the database stores in advance sensor data indicating the relationship between the type of defect and the sensor used for inspecting the defect,
wherein the defect detecting unit performs image processing to detect the defect from the captured image and obtain the type of defect, and
wherein the sensor selecting unit selects a sensor to be used for inspecting the defect in accordance with the type of defect based on the sensor data stored in the database.

2. The defect inspection system according to claim 1,
wherein the processing device includes a defect calculating unit, and
wherein the defect calculating unit obtains a position of the defect in the inspection target object from the captured image.

3. The defect inspection system according to claim 2,
wherein the processing device includes a repair possibility determining unit,
wherein the database stores a threshold for a size of the defect and repair amount data indicating a relationship between the size of the defect and a repair amount for repairing the defect,
wherein when the size of the defect is less than the threshold stored in the database, the repair possibility determining unit determines that the defect is repairable, and
wherein when the defect is repairable, the repair possibility determining unit obtains the repair amount with reference to the repair amount data stored in the database.

4. The defect inspection system according to claim 1, further comprising:
a display device,
wherein the sensor selecting unit displays a selected sensor on the display device.

5. The defect inspection system according to claim 1, further comprising:
a work robot,
wherein the sensor selecting unit transmits a signal indicating a selected sensor to the work robot.

6. The defect inspection system according to claim 3, further comprising:
a display device,
wherein the repair possibility determining unit displays the position of the defect and the repair amount on the display device.

7. The defect inspection system according to claim 3, further comprising:
a work robot,
wherein the repair possibility determining unit transmits a signal indicating the position of the defect and the repair amount to the work robot.

8. A defect inspection method comprising:
an imaging step of imaging an inspection target object with a camera to obtain a captured image of the inspection target object;
a defect detecting step of causing a processing device to perform image processing to detect a defect of the inspection target object from the captured image and obtain a type of defect; and
a sensor selecting step of causing the processing device to select a sensor to be used for inspecting the defect in accordance with the type of defect based on sensor data indicating a relationship between the type of defect and a sensor to be used for inspecting the defect,
wherein a relationship between a type of defect and a sensor used for inspecting the defect is determined in advance, and
wherein the sensor data is stored in advance in the database.
